# EUROPEAN PATENT APPLICATION

(11) **EP 4 733 032 A1**
(43) Date of publication of application: **29.04.2026**
(21) Application number: 25205357.4
(22) Date of filing: 29.09.2025
(51) Int. Cl.: B29C 45/00, C08K 3/00, C08L 77/00, C08L 77/06

(54) **POLYAMIDE 56 COMPOSITION CONTAINING A POLYOLEFIN MOLD RELEASE ADDITIVE**

(30) Priority: 29.09.2024 CN 202411379697
(71) Applicant: TE Connectivity Solutions GmbH, 8200 Schaffhausen (CH); Tyco Electronics (Shanghai) Co., Ltd., Pilot Free Trade Zone Shanghai 200131 (CN)
(72) Inventor: Tao, Dejie, Fremont, 94555 (US); Wang, Lei, Fremont, 94555 (US); Huang, Zhongxi, Shanghai, 200131 (CN); Li, Dan, Shanghai, 200131 (CN); Hoarfrost Beers, Megan, Fremont, 94555 (US); Gao, Ting, Fremont, 94555 (US)
(74) Representative: Johnstone, Edward Ian

(57) **Abstract**

A polyamide 56 composition comprises a polyamide 56 resin and a polyolefin mold release additive. The polyamide 56 composition can be injection molded into articles.

## Description

### FIELD OF THE INVENTION

The present invention relates to a polyamide 56 composition containing a polyolefin mold release additive and an injection molded article made from the polyamide 56 composition.

### BACKGROUND OF THE INVENTION

Polyamides are some of the most widely used thermoplastic materials due to their physical characteristics. Polyamides are polymers with repeat units linked by amide bonds, produced, for example, by the condensation of a diacid and diamine. They have good abrasion and wear resistance, as well as high chemical and corrosion resistance. Polyamides have flexibility and low density in addition to ultraviolet resistance. Traditional polyamides are generally easily moldable. In light of these characteristics, polyamides play an important role in many automotive, electrical, and consumer goods applications.

As many traditional polyamides are made from fossil fuels which emit carbon dioxide and contribute to global warming, there has been an increased attempt to use biobased polyamides. Examples of biobased polyamides include but are not limited to polyamide 56 and polyamide 1010. However, some of these biobased polyamides have a stronger adhesion to metal which may cause a composition containing biobased polyamides to stick to the mold during the molding process. This sticking increases the molding time as compared to non-biobased polyamides. Longer molding times results in a reduction of productivity, as well as increased costs.

Injection molding is a manufacturing process for producing parts from thermoplastic materials such as polyamide. Generally, the thermoplastic material is fed into a heated barrel, molten and forced into a mold cavity, where it hardens by cooling. After the hardening, the part maintains the shape of the mold cavity. Typically the shorter the time for hardening, the more quickly the process progresses. Mold cavities may be produced from metal, such as steel, and are precision-machined to form the features of the desired end part.

After being hardened, the parts are released from the mold by opening of the mold and ejecting the part from the cavity of the mold. Ejection often takes place by pushing the article out of the mold by ejecting pins, coming up from the cavity wall, normally in the direction of ejection of the part. It is important that the part easily and quickly releases from the mold, so that no increase in cycle time of the production of the part takes place. If the part does not release easily, it is even possible that the part can be damaged during ejection from the mold. The ejection of the parts is facilitated by almost completing or even fully completing the hardening step in the mold, by total cooling down of the part. Because of the cooling process the dimensions of the part decrease, due to thermal shrinkage and crystallization of the thermoplastic material. However a total cooling down of the part may take a substantial amount of time, so that the cycle time for the production of the part increases to an unacceptable level and it is no longer possible to produce the parts at an acceptable cost. Mold release is further enhanced by the addition of a mold release agent to the thermoplastic composition. The addition of the mold release additive must be balanced against any potential negative influence on the surface properties of the part. A mold release additive is a chemical compound that facilitates the release of a part from a mold by creating a slip effect between the surface of the part and the surface of the mold.

Examples of mold release additives which can be used in thermoplastic materials conventionally include fatty acids, fatty acid metals salts, fatty acid esters, fatty acid amides, fatty acid soaps, (modified) paraffin waxes, and (modified) polyolefin waxes.

U.S. Patent No. 3,423,503 describes the use of a polyolefin mold release agent. The polyolefin has from 2 to 4 carbon atoms and a melting point of about 100 to 250° F within a suitable carrier and the polyolefin contains about 0.3 to about 5 parts of an antioxidant formed by reacting a phenol with a dicyclopentadiene. A metal mold is treated with the polyolefin mold release agent before molding polyurethane.

U.S. Patent Application Pub. No. US2009/0306330A1 describes a polyamide resin comprising a dicarboxylic acid comprising an adipic acid unit and a diamine unit comprising a pentamethylenediamine and a hexamethylenediamine wherein the weight ration of the pentamethylenediamine unit to the hexamethylenediamine unit is in the range of 95:4 to 60:4, and which can be produced by using raw materials that are free from generation of carbon dioxide. The publication also describes a hinged molded product made from the polyamide resin.

Chinese patent application CN106867250A describes a polyamide composition for rapid injection molding. The polyamide composition comprises 95-100 parts by weight of a polyamide resin and less than 0.5 parts by weight of a nucleating agent. The polyamide resin used in the polyamide composition includes polyamide 56. The polyamide composition may also include a lubricant. The lubricant includes one or more of N,N'-ethylene-bis-stearamide (EBS), amino silicone oil, glyceryl monostearate, polydimethylsiloxane, low molecular weight polyethylene, low molecular weight ethylene-vinyl acetate copolymer, sodium stearate, calcium stearate, barium stearate, zinc stearate, lithium stearate, microcrystalline wax, oxidized polyethylene wax and pentaerythritol stearate. The weight portion of the lubricant is preferably 0.05-1 weight portion of the composition.

U.S. Patent No. 9,873,793B2 describes a polyamide resin composition, a method of manufacturing and a molded product. The polyamide resin composition is usable to produce a molded product having excellent heat aging resistance, surface appearance, retention stability, dimensional accuracy, chemical resistance and creep resistance. One of the polyamide resins that can be used in the composition described in this patent includes nylon 56.

U.S. Patent No. 9,957,388B2 describes a polybutylene terephthalate resin composition. The resin composition includes a polyolefin mold release agent. The polyolefin mold release agent bears a functional group compatible with polybutylene terephthalate resin such as a carboxylic acid group, carboxylic anhydride group, haloformyl group, ester group, metal carboxylate group, hydroxyl group, alkoxyl group, and epoxy group.

U.S. Patent Application Publication No. US2018/0350532A1 describes a molded case circuit breaker base which is made of a polyamide resin. A polyamide resin having thermally conductivity property as well as an electrically insulating property, such as polyamide 56 can be used as a material of the molded case circuit breaker base.

European Patent Specification EP 2896656B1 describes a polyamide resin and molded article. The polyamide resin used in this application is nylon 56. The patent also discusses the use of mold release agents. Examples of mold release agents which can be used in the composition include ethylenediamine-stearic acid- sebacic acid polycondensates and silicone compounds.

U.S. Patent No. 10,233,326B2 describes a polyamide moulding compound which consists of a blend of two specific polyamides. The first polyamide is based substantially on 1,5-pentadiamine. The second polyamide is polyamide 6I/6T. The polyamide moulding compound is distinguished from other polyamide moulding compounds as having low shrinkage and low differential shrinkage (difference between shrinkage of the moulded article longitudinally and traversely relative to the injection flow).

A molded article comprising resin composition containing polyamide resin is described in European Patent Specification, EP 3369778B1. The polyamide resin can be nylon 56. The composition also contains a mold release agent such as ethylene diamine/stearic acid/sebacic acid polycondensate or a silicone compound.

Chinese Patent No. CN10966294B describes polyamide 56 composition with an improved crystallization rate, which consists of 99.75-99.95 wt.% of polyamide, 0.05-0.15 wt.% of a copper-containing mixture and 0-0.5 wt.% of other additives, wherein the copper-containing mixture at least comprises a copper-containing compound, and the copper-containing compound is copper salt or a copper salt complex. The polyamide 56 composition also includes a polyamide heat stabilizer conventionally used in polyamides and thereby results in a very high molding efficiency upon rapid cooling in an injection molding process with little variation in the manufacturing cost of the composition, compared to other inorganic type nucleation-modified polyamide compositions.

U.S. Patent No. 11,898,035B2 describes a flame retardant polyamide composition which can be molded into various articles. The polyamide composition can include a mold release agent such as a polyolefin wax.

Thus, there exists a need for a biobased polyamide composition comprising a polyamide 56 and a polyolefin mold release additive, which can be easily and economically molded into articles, preferably using injection molding.

### SUMMARY OF THE INVENTION

An embodiment is directed to a polyamide 56 composition comprising a polyamide 56 and a polyolefin mold release additive. The polyolefin mold release additive may comprise a functionalized polyolefin. The polyolefin mold release additive may, for example, comprise a functionalized polyolefin with a glycidyl group, a functionalized polyolefin with an acid group, or a functionalized polyolefin with an anhydride group. Where the polyolefin mold release additive comprises a functionalized polyolefin with a glycidyl group, the functionalized polyolefin with a glycidyl group may be chosen from the group consisting of: poly(ethylene-co-glycidyl methacrylate); poly(ethylene-co-methyl-acrylate-co-glycidyl methacrylate); random ethylene-glycidyl methacrylate copolymer; and random ethylene-methyl acrylate-glycidyl methacrylate terpolymer. Where the polyolefin mold release additive comprises a functionalized polyolefin with an acid group, the functionalized polyolefin with an acid group may be poly(ethylene-co-acrylic acid). Where the polyolefin mold release additive comprises a functionalized polyolefin with an anhydride group, the functionalized polyolefin with an anhydride group may be chosen from the group consisting of: polystyrene-block-poly(ethylene-ran-butylene)-block polystyrene-graft maleic anhydride; maleic anhydride grafted high-density polyethylene; polypropylene-graft-maleic anhydride and polyisoprene-graft- maleic anhydride. The polyolefin mold release additive may be greater than at least 1 wt.% of the polyamide 56 composition. A further embodiment is directed to an article made by injection molding a polyamide 56 composition comprising a polyamide 56 and a polyolefin mold release additive, wherein said polyolefin mold release additive is at least 1 wt.% of the polyamide 56 composition. The polyolefin mold release additive may be chosen from the group consisting of: a functionalized polyolefin with a glycidyl group, a functionalized polyolefin with an acid group, and a functionalized polyolefin with an anhydride group.

Another embodiment is directed to a polyamide 56 composition comprising polyamide 56 and a polyolefin mold release additive wherein the composition is molded into an article.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

The accompanying drawings, which are incorporated into and form a part of the specification, schematically illustrate one or more illustrative embodiments of the invention and, together with the general description given above and detailed description given below, serve to explain the principles of the invention, and wherein:

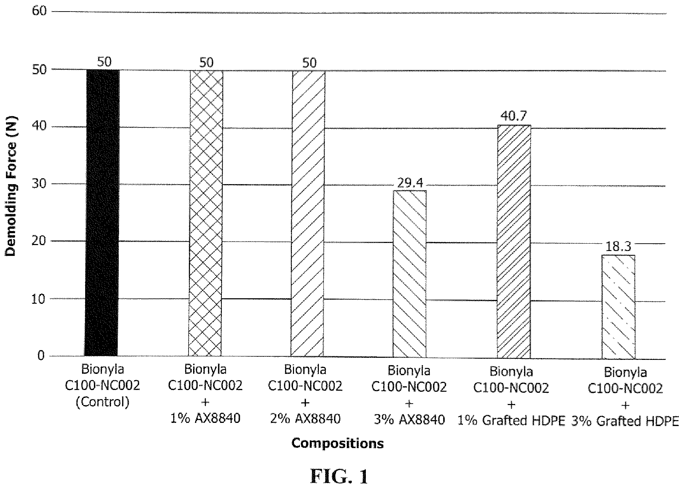

FIG. 1 is chart showing the demolding force measurement of various polyamide 56 compositions using a TA Discovery Rheometer, HR-2.

### DETAILED DESCRIPTION OF THE INVENTION

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The polyamide 56 composition of the instant invention comprises a biobased polyamide resin. Biobased polyamide resins can be produced using polycondensation processes with dioic acids of different chain length. Polyamide 56 resin is polymerized from biobased 1,5 diaminopentane and fossil based adipic acid. However, due to its structure, polyamide 56 has a stronger adhesion to metal than polyamide 66 which causes it to stick to metal molds during the molding process. Examples of a commercially available polyamide 56 resins that can be used in the instant invention include ECOBLEND N56F from Shanghai Kumho Sunny Plastics Co., Ltd., BIONYLA C100-NC002 from Kingfa Sci.& Tech. Co., Ltd., and BIONYLA R30G0001 from Kingfa Sci.& Tech. Co., Ltd.

The polyamide 56 composition also includes a polyolefin mold release additive in addition to the polyamide 56 resin. A mold release additive is a chemical compound that facilitates the release of a part from a mold by creating a slip effect between the surface of the part and the surface of the mold. The polyolefin mold release additive that is used in the polyamide 56 composition is a functionalized polyolefin. Any type of polyolefin with a functionalization that is compatible with polyamide 56 can be used. The functionalized polyolefins include polyolefins with a glycidyl group, an acid group, or an anhydride group. It is believed that the functional group on the polyolefin reacts with the polyamide 56 composition. This reaction enables the polyamide 56 composition with a polyolefin mold release additive to be much more easily removed from a mold than a polyamide 56 composition without a polyolefin mold release additive.

Functionalized polyolefins with glycidyl groups which can be used as a polyolefin mold release additive include but are not limited to poly(ethylene-co-glycidyl methacrylate); poly(ethylene-co-methyl-acrylate-co-glycidyl methacrylate); random ethylene-glycidyl methacrylate copolymer; and random ethylene-methyl acrylate-glycidyl methacrylate terpolymer.

An example of a commercially available poly(ethylene-co-glycidyl methacrylate) is Product Number 430862, available from Sigma-Aldrich. Product Number 433640, from Sigma-Aldrich is a commercially available poly(ethylene-co-methyl-acrylate-co-glycidyl methacrylate). An example of a commercially available random copolymer of ethylene and glycidyl methacrylate copolymer includes LOTADER AX8840, available from Arkema Group. LOTADER AX8900 is an example of a commercially available random ethylene-methyl acrylate-glycidyl methacrylate terpolymer, available from Arkema Group.

Functionalized polyolefins with an acid group can also be used as polyolefin mold release additive. An example of a functionalized polyolefin with an acid group is poly(ethylene-co-acrylic acid). A commercially available for of poly(ethylene-co-acrylic acid) is Product Number 426717, available from Sigma-Aldrich.

Functionalized polyolefins with an anhydride group can also be used as a polyolefin mold release additive. Examples of functionalized polyolefins with an anhydride group, include but are not limited to polystyrene-block-poly(ethylene-ran-butylene)-block polystyrene-graft maleic anhydride; maleic anhydride grafted high-density polyethylene; polypropylene-graft-maleic anhydride and polyisoprene-graft-maleic anhydride. Product Number 432431 available from Sigma-Aldrich is an example of a commercially available polystyrene-block-poly(ethylene-ran-butylene)-block polystyrene-graft maleic anhydride. OREVAC 18507, from Arkema Group is an example of a commercially available maleic anhydride grafted high polyethylene. Propylene-graft maleic anhydride is commercially available as Product Number 427845 from Sigma-Aldrich. Product Number 460060 is an example of a polyisoprene-graft- maleic anhydride available from Sigma-Aldrich.

If used in the polyamide 56 composition, the functionalized polyolefin is in the range of about at least 1 wt.% (based upon the total weight of the polyamide 56 composition); and preferably in the range of about 2 to about 5 wt. % (based upon the total weight of the polyamide 56 composition). In one embodiment, the polyamide 56 composition contains about 3 wt.%. of the functionalized polyolefin (based upon the total weight of the polyamide 56 composition).

Other conventional additives may be added to the polyamide 56 composition. Examples of conventional additives include pigments, dyes, voiding agents, antistatic agents, foaming agents, plasticizers, radical scavengers, anti-blocking agents, anti-dust agents, antifouling agents, surface active agents, slip aids, optical brighteners, viscosity modifiers, gloss improvers, dispersion stabilizers, UV stabilizers, UV absorbers, antioxidants such as phenol antioxidants or amine antioxidants, lubricity agents, heat stabilizers, hydrolysis stabilizers, cross-linking activators, coupling agents, radio opacifiers (such as for example, but not limited to, barium sulfate), tungsten metal, non-oxide bismuth salts, colorants, reinforcing agents, impact strength modifiers, flame retardants, and any combination thereof. Such additives may be included in conventional amounts.

The polyamide 56 resin is mixed with the polyolefin mold release additive. The mixing equipment can be any suitable equipment used in the art of mixing concentrated solids. Examples of such suitable equipment include a batch mixer such as a Brabender mixer or a Banbury mixer, a single extruder, a twin screw extruder, high speed centrifugal mixers and the like.

The mixed polyamide 56 composition is then preferably injection molded. Any conventional injection molding machine which can be used for polyamides can be used to make parts from the polyamide 56 composition of the instant invention.

Although the polyamide 56 composition of the present invention is preferably injection molded, the polyamide 56 composition can be molded into a molded article according to a molding method generally employed for a thermoplastic resin composition, including but not limited to injection compression molding, extrusion molding, press forming, blow molding, calender molding or cast molding. In particular, from the viewpoint of ease in molding, mass productivity and cost, injection molding is the preferred molding method.

The polyamide 56 composition can be molded into many different parts. For example, the composition can be made into seals, gaskets, connectors, wires, cables, printed wire boards, or EMI shields as well as other electronic or computer components. The composition can be used to make electronic components, such smart phones, general automotive parts, electric motors, e-powertrains, batteries and battery enclosures, chargers for electric vehicles and other components of electric vehicles. In addition, the composition of the instant invention can be used to make molded parts. Furthermore, the polyamide composition of the instant invention can also be used to make medical devices, surgical instruments, medical enclosures or wearable medical devices. Moreover, the polyamide 56 composition of the instant invention can be used to manufacture any product which withstands load or mechanical function.

### Examples

Various samples were prepared using a polyamide 56, and a mold release additive. The polyamide 56 resin and mold release additive were first dry mixed together. The mixed material were then compounded with a TSM D6/2 Brabender extruder having 42 mm parallel counter-rotating twin screw. The compounding temperature was set in the range of about 275° to about 285 °C. The screw speed of the extruder was set to 85 rpm.

Once the material was mixed together as set forth above, the material was then injection molded into sample parts using a 130 Ton SE-D Molding Machine having a 28 mm screw diameter. The injection temperature was about 285° C and the mold temperature was about 80° C. A part was formed using various polyamide 56 compositions as set forth below and evaluated at, 5 seconds, 7 seconds, and 20 seconds of cooling to determine if the part was sticking to the mold.

Example 1 is the control example in which only polyamide 56 resin was used in the polyamide composition. In Example 2, the polyamide 56 composition included the polyamide 56 resin and 1 wt. % (based upon the total composition) of stearamide. In Example 3, the polyamide 56 composition included the polyamide 56 resin and 2 wt. % (based upon the total composition) of stearamide. In Example 4, the polyamide 56 composition included the polyamide 56 resin and 3 wt. % (based upon the total composition) of stearamide. In Example 5, the polyamide 56 composition included polyamide 56 resin and 2 wt. % of a functionalized polyolefin copolymer, LOTADER AX8840, available from Arkema Group. Examples 1 through 5 were all processed and molded in the same manner. The results showed that only the polyamide 56 composition containing the functionalized polyolefin copolymer did not stick to the mold with 5 seconds and 7 seconds cooling time. Example 1, the control without any mold control additive, stuck to the mold even with 20 seconds cooling time. For all the examples with stearamide (Examples 2-4), the parts stuck to the mold with 7 seconds cooling time. This series of examples shows that the addition of a functionalized polyolefin copolymer such as in Example 5 added to a polyamide 56 resin works as a mold release additive.

FIG. 1 is a chart showing the demolding force measurements of various polyamide 56 compositions (described in FIG. 1) of the instant invention in Newtons. The demolding force was measured using a rheometer, TA Discovery HR-2. In this series of experiments, the test samples (both with and without the additive) were injection molded to be 5 mm in diameter with a thickness of 0.8mm. If the additive was used in the composition, it was present at 0.5wt. % of the total composition. The rheometer was set to "other axial" to measure the demolding force. In this particular rheometer, the maximum demolding force is 50 N. The melting temperature is set to 260° C and the test sample is maintained at that temperature (i.e. soaked) for 10 seconds. The temperature for starting the test is set to 175° C and soak time is 5 seconds. The fixture gap is set to 0.775 mm and the gap speed is set to 2 µm. The test is started and the chamber and fixture are heated. The test sample is placed on the bottom fixture of the rheometer. The test sample is melted and cooled down to the test temperature. The fixture is pulled open and the force is recorded. These test results show that the demolding force decreased for each composition that contained a mold release additive as compared to the same composition without any mold release additive. These test results show that the demolding force decreased for each composition that contained a polyolefin mold release additive as compared to the same composition without any mold release additive.

One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A polyamide 56 composition comprising a polyamide 56 and a polyolefin mold release additive.

2. The composition of claim 1, wherein the polyolefin mold release additive comprises a functionalized polyolefin with a glycidyl group, a functionalized polyolefin with an acid group, or a functionalized polyolefin with an anhydride group.

3. The composition of claim 2, wherein the polyolefin mold release additive comprises a functionalized polyolefin with a glycidyl group.

4. The composition of claim 3, wherein the functionalized polyolefin with a glycidyl group is poly(ethylene-co-glycidyl methacrylate).

5. The composition of claim 3, wherein the functionalized polyolefin with a glycidyl group is poly(ethylene-co-methyl-acrylate-co-glycidyl methacrylate).

6. The composition of claim 3, wherein the functionalized polyolefin with a glycidyl group is a random ethylene-glycidyl methacrylate copolymer.

7. The composition of claim 3, wherein the functionalized polyolefin with a glycidyl group is random ethylene-methyl acrylate-glycidyl methacrylate terpolymer.

8. The composition of claim 2, wherein the polyolefin mold release additive comprises a functionalized polyolefin with an acid group.

9. The composition of claim 8, wherein the functionalized polyolefin with an acid group is poly(ethylene-co-acrylic acid).

10. The composition of claim 2, wherein the polyolefin mold release additive comprises a functionalized polyolefin with an anhydride group.

11. The composition of claim 10, wherein the functionalized polyolefin with an anhydride group is polystyrene-block-poly(ethylene-ran-butylene)-block polystyrene-graft maleic anhydride.

12. The composition of claim 10, wherein the functionalized polyolefin with an anhydride group is maleic anhydride grafted high-density polyethylene.

13. The composition of claim 10, wherein the functionalized polyolefin with an anhydride group is polypropylene-graft-maleic anhydride, or wherein the functionalized polyolefin with an anhydride group is polyisoprene-graft- maleic anhydride.

14. The composition of any preceding claim, wherein the polyolefin mold release additive is greater than at least 1 wt.% of the polyamide 56 composition.

15. An article made by injection molding a polyamide 56 composition comprising a polyamide 56 and a polyolefin mold release additive, wherein the polyolefin mold release additive is at least 1 wt.% of the polyamide 56 composition.
